# NEUE EUROPÄISCHE PATENTSCHRIFT

(11) **EP 1 336 520 B2**
(45) Veröffentlichungstag und Bekanntmachung des Hinweises auf die Entscheidung über den Einspruch: **05.11.2014**
(45) Hinweis auf die Patenterteilung: 12.12.2007
(21) Anmeldenummer: 03003593.5
(22) Anmeldetag: 17.02.2003
(51) Int. Cl.: B60J 7/00, B60J 1/00

(54) **Glasdeckel für Fahrzeugdächer mit Splitterschutzfolie**
Glass panel for vehicle roofs with anti-shatter foil
Vitre pour toit de véhicule avec une feuille de protection anti-éclat

(30) Priorität: 18.02.2002 DE 10206717
(43) Veröffentlichungstag der Anmeldung: 20.08.2003
(73) Patentinhaber: Webasto AG, 82131 Stockdorf (DE)
(72) Erfinder: Teschner, Helmut, 86923 Finning (DE)
(74) Vertreter: Schwan, Ivo

(56) Entgegenhaltungen:
- EP-A- 0 901 918
- EP-A- 0 997 333
- EP-A- 1 036 683
- EP-A2- 0 901 918
- WO-A1-93/19491
- WO-A1-95/00329
- WO-A1-03/046617
- DE-A- 3 831 503
- DE-A- 19 757 061
- DE-A1- 3 633 708
- DE-C- 19 819 679
- DE-U- 8 901 830
- US-A- 2 875 543
- US-A- 3 489 640

## Beschreibung

Die vorliegende Erfindung betrifft ein Verfahren zur Herstellung eines Glasdeckels zum Verschließen einer Öffnung eines Fahrzeugdaches, der eine mindestens zum Teil transparente Scheibe aus Sicherheitsglas umfasst.

Ein solcher Glasdeckel ist beispielsweise aus der DE 196 30 813 A1 bekannt, wobei eine gewölbte Scheibe aus Einscheiben-Sicherheitsglas an ihrer Unterseite mit einem elektrochromen Element versehen ist, welches zum Fahrzeuginnenraum hin mittels einer Kunststoffscheibe geschützt ist, welche mittels einer als Kleber wirkenden Schicht des elektrochromen Elements an der Glasscheibe befestigt ist.

Ferner sind Glasdeckel bekannt, welche an ihrer Unterseite mit einem Solarzellenverbund laminiert sind, der an seiner Unterseite mit einer Abdeckfolie versehen ist, wie zum Beispiel den folgenden Druckschriften zu entnehmen ist:

Aus der DE 38 31 503 A1 ist ein Glasdeckel bekannt, der mit einer Splitterschutzfolie mit einer reliefartigen Gitterstruktur versehen ist, die eine Höhe hat, die etwa ein Viertel der mittleren Wellenlänge des sichtbaren Lichts beträgt, um die Scheibe zu entspiegeln.

Die DE 89 01 830 U1 zeigt einen Glasdeckel, auf welchen im Siebdruckverfahren eine teilweise lichtundurchlässige, strukturierte Schicht aufgebracht ist, die wiederum von einer transparenten Kunststoffschicht, die als Splitterschutzfolie wirkt, zum Fahrzeuginnenraum hin abgedeckt ist.

Die EP 0 997 333 A2 zeigt einen bedruckbaren Glasdeckel, dessen Unterseite mit einer eingefärbten transparenten Polycarbonatfolie beklebbar ist, und wobei Solarzellen an der Unterseite des Deckels von einer separaten undurchsichtigen Folie zum Fahrzeuginnenraum hin abgedeckt sein können.

Die EP 1 036 683 A2 zeigt einen Glasdeckel zum Verschließen einer Öffnung eines Fahrzeugdaches, mit einer mindestens zum Teil transparenten Scheibe, einem an der Unterseite der Scheibe angeordneten Solarzellenverbund und einer transparenten Splitterschutzfolie, die an der Unterseite des Solarzellenverbunds auflaminiert ist, wobei die Splitterschutzfolie eingefärbt ist, um die Lichttransmission durch die Splitterschutzfolie zu verringern.

Es ist Aufgabe der vorliegenden Erfindung, einen Glasdeckel mit oder ohne Solarfunktion für ein Fahrzeugdach zu schaffen, welcher einen möglichst guten Schutz der Insassen und des Fahrzeuginnenraums bei Bruch des Glasdeckels bietet bei gleichzeitiger Verringerung der Lichttransmission durch die Splitterschutzfolie und dennoch eine ästhetisch ansprechende Ansicht aus dem Fahrzeuginnenraum bietet.

Diese Aufgabe wird erfindungsgemäß gelöst durch ein Verfahren zur Herstellung eines Glasdeckels wie es in im Anspruch 1 definiert ist. Dabei ist vorteilhaft, dass trotz des Vorsehens einer die Fahrzeuginsassen bei Bruch der Scheibe vor Splittern schützenden Splitterschutzfolie mittels der beanspruchten Maßnahmen ein ansprechendes Erscheinungsbild des Glasdeckels bezüglich des Fahrzeuginnenraums gewährleistet wird. Dies ist in so fern von Bedeutung, als die Splitterschutzfolie von unten, d.h. im Sichtbereich, auflaminiert wird, wobei Abdrücke entstehen können, welche das ästhetische Erscheinungsbild stören können; in diesem Zusammenhang fallen auch eventuell vorhandene kleinere Folienfehler unmittelbar auf. Auch bei der Verwendung eines Verbunds aus zumindest teilweise transparenten Solarzellen wird das ästhetische Erscheinungsbild bezüglich des Fahrzeuginnenraums ebenfalls von der Folien- bzw. Laminiergüte bestimmt.

Das Versehen der Folie mit einer definierten, nicht flachen Oberflächenstruktur ist in so fern vorteilhaft, als eine definierte Oberflächenstruktur das optische Erscheinungsbild in ästhetischer Hinsicht weniger stört als einzelne undefinierte Abdrücke.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- FIG. 1: einen Schnitt durch den seitlichen Randbereich eines erfindungsgemäßen Glasdeckels gemäß einer ersten Ausführungsform; und
- FIG. 2: eine Ansicht wie FIG. 1, wobei jedoch eine alternative Ausführungsform gezeigt ist.

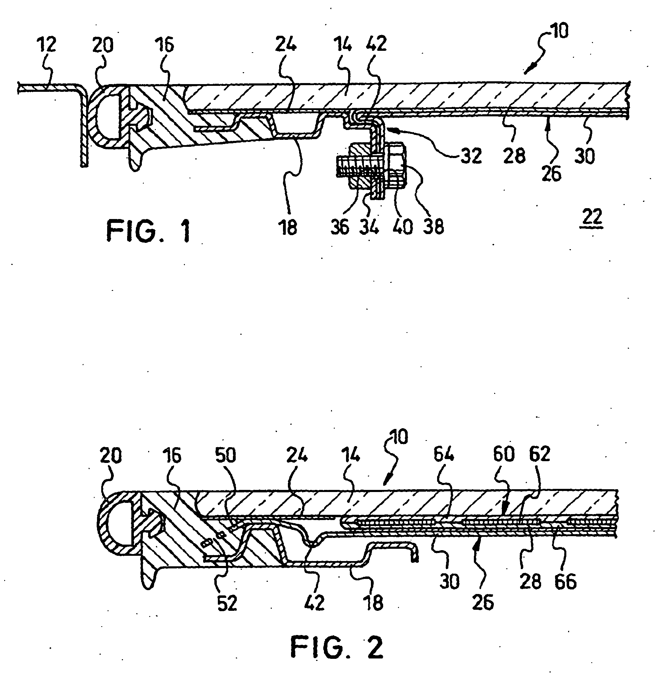

In FIG. 1 ist eine erste Ausführungsform eines Glasdeckels 10 dargestellt, welcher zum Verschließen bzw. wahlweisen Freigeben einer Öffnung in einer festen Dachhaut 12 vorgesehen ist. Es kann sich dabei beispielsweise um den Deckel eines Schiebedaches, Schiebehebedaches, Ausstelldaches oder Spoilerdaches handeln. Der Glasdeckel 10 umfasst eine transparente Glasscheibe 14, die in ihrem Randbereich mit einer umlaufenden Umschäumung 16 (beispielsweise aus Polyurethanschaum) versehen ist, um ein Deckelinnenblech 18 im Randbereich der Scheibe 14 an deren Unterseite zu befestigen. Das Deckelinnenblech 18 dient als Trägeranordnung für die Glasscheibe 14, um diese mit einer Verstellmechanik (nicht dargestellt) für den Deckel 10 zu verbinden. Am Außenumfang der Umschäumung 16 ist eine Dichtung 20 vorgesehen, um bei geschlossenem Deckel 10 das Eindringen von Feuchtigkeit in den Fahrzeuginnenraum 22 zu verhindern. Ferner ist im Randbereich der Scheibe 14 an der Unterseite im Bereich der Umschäumung 16 bzw. des Deckelinnenblechs 18 eine Glasfritte 24 vorgesehen, die als nicht-transparenter Sichtschutz dient, um die Umschäumung 16 und das Deckelinnenblech 18 von oben abzudecken.
Die Glasscheibe 14 ist vorzugsweise aus thermisch vorgespannten Einscheiben-Sicherheitsglas (ESG) ausgebildet.

In ihrem zentralen, transparenten Bereich ist die Scheibe 14 an ihrer Unterseite mit einem Folienverbund 26 laminiert bzw. verklebt, wobei sich dieser zentrale Bereich bis zu der Fritte 24 erstreckt. Der Folienverbund 26 ist an seiner Oberseite, d.h. an der der Scheibe 14 zugewandten Seite, mit einer Klebefolie bzw. Klebeschicht 28 versehen, welche dazu dient, eine darunter liegende Schutzfolie 30 mit der Scheibe 14 zu verkleben. Die Schutzfolie 30 ist reißfest und kratzfest ausgebildet. In einem schematisch mit dem Bezugszeichen 32 bezeichneten Randbereich wird der Folienverbund 26 so nach innen umgeschlagen, dass die Klebefolie 28 aufeinander zu liegen kommt, bevor der Folienverbund 26 mittels der Klebefolie 28 im übrigen Bereich des Folienverbunds 26 an dem zentralen Bereich der Scheibe 14 befestigt wird. In diesem Zustand ist der Folienverbund 26 hinsichtlich seiner Grundfläche kleiner als die Glasscheibe 14, jedoch größer als deren zentraler transparenter Bereich. Nach dem Verklebungs- bzw. Laminationsvorgang kann der umgeschlagene Bereich 32 von der Unterseite der Glasscheibe 14 gelöst und nach unten geklappt werden, siehe FIG.4.

Anschließend wird das Deckelinnenblech 18 mittels der Umschäumung 16 an der Glasscheibe 14 angeschäumt. Das Deckelinnenblech 18 ist mit einem nach unten ragenden Befestigungsteil 34 mit einer Bohrung 36 versehen, an welchem der umgeschlagene Bereich 32 des Folienverbunds 26 mittels einer Schraubverbindung 38, welche durch eine entsprechende Öffnung 40 in dem umgeschlagenen Bereich 32 des Folienverbunds 26 und durch die Bohrung 36 geführt ist, befestigt wird.

Der umgeschlagene Bereich 32 bildet mit dem verklebten Bereich des Folienverbunds 26 eine Zugentlastungsfalte 42, welche dazu dient, um zu verhindern, dass die Klebeverbindung des Folienverbunds 26 im zentralen Bereich der Glasscheibe 14 durch die Befestigung des umgeschlagenen Bereichs 32 an dem Deckelinnenblech 18 auf Zug belastet wird, wenn sich der Deckel 10 beispielsweise durch bei einer Hochgeschwindigkeitsfahrt auftretenden Kräfte elastisch verformt. Auf diese Weise kann die Lebensdauer des Deckels 10 erhöht werden.

Statt einer Schraubverbindung 38 kann der umgeschlagene Bereich 32 auch auf andere mechanische Weise, z.B. mittels einer Klemmverbindung, an dem Deckelinnenblech 18 befestigt werden.

Die beschriebene Konstruktion dient dazu, sicherzustellen, dass auch bei Bruch der Glasscheibe 14 eine gewisse mechanische Integrität des Deckels 10 erhalten bleibt, indem der Folienverbund 26 auch bei zerbrochener Scheibe 14 in seinem Randbereich, d.h. in dem umgeschlagenen Bereich 32, mit dem von der Umschäumung 16 und dem Deckelinnenblech 18 gebildeten Deckelrahmen, der auch bei zerbrochener Glasscheibe 14 erhalten bleibt, aufgespannt bleibt. Dabei verliert der Folienverbund 26 zwar seine Biegesteifigkeit, verbleibt jedoch in dem Deckel 10 an Ort und Stelle und kann dadurch verhindern, dass einerseits Insassen durch die zerbrochene Scheibe 14 nach außen geschleudert werden und dass andererseits Splitter der Scheibe 14 oder Gegenstände von außen in den Innenraum 22 eindringen können. Ferner sorgt der Folienverbund 26 im Falle mutwilliger Zerstörung der Glasscheibe 14 auch für einen gewissen Einbruchsschutz. Die Splitter der zerbrochenen Glasscheibe 14 bleiben aufgrund der Klebeschicht 28 an dem Folienverbund 26 hängen.

Die Schutzfolie 30 ist so ausgebildet dass sie eine definierte, nicht flache Oberflächenstruktur aufweist. Dies wird dadurch erzielt, dass in dem Schritt, in welchem die Schutzfolie 30 an die Scheibenunterseite laminiert wird, eine Matrize mit einer entsprechenden Oberflächenstruktur verwendet wird, wobei sich diese Struktur während des Laminierens auf die Folie 30 abdrückt. Vorzugsweise wird dabei eine "genarbte" Struktur verwendet, wie sie beispielsweise auch bei Armaturentafeloberflächen Verwendung findet. Unter "genarbten Oberflächenstrukturen" sollen Oberflächenstrukturen verstanden werden, welche mit einem regelmäßigen Muster aus eingedrückten Vertiefungen versehen sind.

Bei der Klebefolie handelt es sich vorzugsweise um einen Poly(vinylbutyral)-Film (PVBFilm) oder um eine transparente PU-Folie, während es sich bei der Schutzfolie 30 vorzugsweise um eine kratzfest beschichtete Kunststofffolie, vorzugsweise eine mitPolysiloxan beschichtete Poly(ethylenterephthalat)-Folie (PET-Folie), handelt.

In FIG. 2 ist eine Ausführungsform gezeigt, bei welcher der Deckel als sogenannter Solardeckel ausgebildet ist, wobei die Unterseite der Glasscheibe 14 mit einem Solarzellenfolienverbund 60 versehen ist, welcher eine Mehrzahl von elektrisch miteinander verbundenen Solarzellen 62 aufweist, die zwischen zwei Schmelzklebefolien 64 und 66, vorzugsweise aus EVA, angeordnet sind. Der Solarzellenfolienverbund 60 ist dabei mittels der oberen Schmelzklebefolie 64 an der Unterseite der Glasscheibe 14 angebracht. Der Schutzfolienverbund 26 ist mittels der Klebefolie 28 an der unteren Schmelzklebefolie 66 an dem Solarzellenfolienverbund 60 und damit an der Glasscheibe 14 befestigt.

In dem klebefolienfreien Randbereich 50 ist der Schutzfolienverbund 26 mittels Perforationen 52 in der Umschäumung 16 verankert. Dabei wird im Umfangsrandbereich des Folienverbunds 26 die Klebefolie bzw. Klebeschicht 28 entfernt, so dass in diesem streifenförmigen, klebefolienfreien Randbereich 50 nur noch die Schutzfolie 30 vorhanden ist. Der Folienverbund 26 ist dabei insgesamt mit kleinerer Grundfläche als die Glasscheibe 14 ausgeschnitten, wobei jedoch der bezüglich der Glasfritte 24 innenliegende zentrale Durchsichtsbereich der Glasscheibe 14 kleiner als der ausgeschnittene Folienverbund 26 ist, so dass zumindest der klebefolienfreie Randbereich 50 des Folienverbunds 26 von der Fritte 24 von oben verdeckt ist.

Der klebefolienfreie Randbereich 50 ist mit Perforationen bzw. Öffnungen 52 versehen, die im wesentlichen regelmäßig über den Randbereich 50 verteilt sind.

Zunächst wird der Folienverbund 26 in dem zentralen Bereich der Glasscheibe 14 mittels der Klebeschicht 28 an der Scheibenunterseite angeklebt. Der klebefolienfreie Randbereich 50 geht dabei keine Verbindung mit der Glasscheibe 14 ein. Anschließend wird die so mit dem Folienverbund 26 verklebte Glasscheibe 14 in einem üblichen Schäumwerkzeug mit einem geeigneten Material, beispielsweise Polyurethan, umschäumt, um das Deckelinnenblech 18 an der Glasscheibe 14 zu befestigen, wobei das Schäummaterial durch die Perforationen 52 gelangt. Auf diese Weise kann die Schutzfolie 30 in der Umschäumung 16 verankert werden.

Dabei entspricht die Verankerung der Schutzfolie 30 der mechanischen Befestigung des umgeschlagenen Bereichs 32 des Folienverbunds 26 bei der Ausführungsform gemäß FIG. 1, wobei zwischen dem in der Umschäumung 16 verankerten Bereich und dem mit dem Solarzellenfolienverbund 60 verklebten Bereich des Schutzfolienverbunds 26 eine Entlastungsfalte 42 vorgesehen ist, um eine Delamination bei intakter Scheibe 14 aufgrund einer Zugbelastung der Klebeverbindung zwischen dem Schutzfolienverbund 26 und dem Solarzellenfolienverbund 60, die aufgrund der Verankerung des Bereichs 50 des Schutzfolienverbunds 26 in der Umschäumung 16 entstehen könnte, zu verhindern.

Bei Bruch der Glasscheibe 14 verhindert der in der Umschäumung 16 verankerte Schutzfolienverbund 26 ein Heraus- bzw. Hineinfallen der Scheibensplitter und des Solarzellenfolienverbunds 60 und schützt somit insbesondere den Fahrzeuginnenraum und die Fahrzeuginsassen.

Bei einer abgewandelten Ausführungsform kann die untere Schmelzklebefolie 66 des Solarzellenfolienverbunds 60 entfallen, so dass die Klebefolie 28 des Schutzfolienverbunds 26 direkt mit den Solarzellen 62 bzw. der oberen Schmelzklebefolie 64 des Solarzellenfolienverbunds 60 verklebt ist.

Die Fixierung des Schutzfolienverbunds 26 kann auch auf andere Art als in FIG. 8 gezeigt erfolgen, beispielsweise mittels des in der Ausführungsform gemäß FIG. 1 gezeigten Verfahrens.

Die Schutzfolie 30 kann beispielsweise in der Masse, d.h. über ihre gesamte Dicke, eingefärbt sein, um die Lichttransmission zu verringern. Alternativ oder zusätzlich kann die Schutzfolie 30 in Teilbereichen bedruckt sein, um bestimmte Abschnitte des Solarzellenfolienverbunds 60 zu verdecken. Besonders zweckmäßig ist es dabei, die Solarzellenverbinder zwischen den einzelnen Solarzellen 62 (die Solarzellenverbinder sind in Fig. 2 nicht dargestellt) mittels auf die Schutzfolie 30 aufgedruckten Abdeckstreifen zu verdecken.

Mittels der geschilderten optischen Maßnahmen bezüglich der Schutzfolie 30 kann insgesamt ein homogeneres Erscheinungsbild des Glasdeckels 10 bezüglich des Fahrzeuginnenraums 22 erzielt werden, wobei insbesondere störende Bereiche eines eventuell vorhandenen Solarzellenverbunds verdeckt werden können und Folienfehler oder beim Laminieren verursachte Abdrücke kaschiert werden können.

### Bezugszeichenliste

- **10**: Glasdeckel
- **12**: feste Dachfläche
- **14**: Glasscheibe
- **16**: Umschäumung
- **18**: Deckelinnenblech
- **20**: Dichtung
- **22**: Fahrzeuginnenraum
- **24**: Glasfritte
- **26**: Folienverbund
- **28**: Klebefolie
- **30**: Schutzfolie
- **32**: umgeschlagener Bereich von 26
- **34**: Befestigungsteil
- **36**: Bohrung in 34
- **38**: Schraubverbindung
- **40**: Öffnung in 32
- **42**: Entlastungsfalte
- **50**: klebefolienloser Randbereich von 26
- **52**: Perforationen in 50
- **60**: Solarzellenfolienverbund
- **62**: Solarzellen
- **64, 66**: Schmelzklebefolien von 60

## Patentansprüche

1. Verfahren zur Herstellung eines Glasdeckels zum Verschließen einer Öffnung eines Fahrzeugdaches, mit einer mindestens zum Teil transparenten Scheibe (14) aus Sicherheitsglas, wobei an der Unterseite der Scheibe oder an der Unterseite eines an der Unterseite der Scheibe angeordneten Solarzellenverbunds (60, 62) eine mindestens zum Teil transparente Splitterschutzfolie (30) auflaminiert ist, und wobei die Splitterschutzfolie eine definierte, nicht-flache Oberflächenstruktur aufweist, wobei im Zuge des Verfahrens:
an der Unterseite der Scheibe oder an der Unterseite des an der Unterseite der Scheibe angeordneten Solarzellenverbunds (60, 62) die mindestens zum Teil transparent Splitterschutzfolie (30) auflaminiert wird,
**dadurch gekennzeichnet, dass**
die Splitterschutzfolie (30) mittels Venvendung einer oberflächenstrukturierten Matrize auflaminiert wird, welche eine entsprechende Oberflächenstruktur aufweist, um die Splitterschutzfolie mit der definierten Oberflächenstruktur zu versehen, wobei sich die Oberflächenstruktur der Matrize während des Laminierens auf die Splitterschutzfolie (30) abdrückt.

2. Verfahren gemäß Anspruch 1, **dadurch gekennzeichnet, dass** die Splitterschutzfolie (30) mit einer genarbten Oberflächenstruktur versehen wird.

3. Verfahren gemäß einem der vorgehenden Ansprüche, **dadurch gekennzeichnet, dass** die Solarzellen (62) des Solarzellenverbunds (60) teiltransparent ausgebildet sind.

4. Verfahren gemäß einem der vorgehenden Ansprüche, **dadurch gekennzeichnet, dass** im Randbereich der Scheibe (14) mittels einer Umschäumung (16) an der Scheibenunterseite eine Trägeranordnung (18) angebracht wird, und die Splitterschutzfolie (30) im zentralen Bereich der Scheibe mittels einer Klebefolie (28) an der Scheibenunterseite angeklebt und im Randbereich der Scheibe in die Umschäumung eingeschäumt oder fest mit der Trägeranordnung verbunden wird.

5. Verfahren gemäß einem der vorgehenden Ansprüche, **dadurch gekennzeichnet, dass** die Splitterschutzfolie (30) mittels einer Klebefolie (28) an der Unterseite der Scheibe (14) bzw. des Solarzellenverbunds (60, 62) auflaminiert wird.

## Claims

1. Process for producing a glass panel for closing an opening in a vehicle roof, having a pane (14) of safety glass which is at least partly transparent, an anti-shatter film (30) which is at least partly transparent being laminated onto the underside of the pane or onto the underside of a solar cell assembly (60, 62) arranged on the underside of the pane, and the anti-shatter film having a defined, non-flat surface structure, wherein, in the course of the process:
the anti-shatter film (30) which is at least partly transparent is laminated onto the underside of the pane or onto the underside of the solar cell assembly (60, 62) arranged on the underside of the pane,
**characterized in that**
the anti-shatter film (30) is laminated on by means of the use of a surface-structured die which has a corresponding surface structure, in order to provide the anti-shatter film with the defined surface structure, wherein the surface structure of the die imprints itself on the anti-shatter film (30) during lamination.

2. Process according to Claim 1, **characterized in that** the anti-shatter film (30) is provided with a grained surface structure.

3. Process according to one of the preceding claims, **characterized in that** the solar cells (62) of the solar cell assembly (60) are partly transparent.

4. Process according to one of the preceding claims, **characterized in that** a carrier arrangement (18) is fitted in the edge region of the pane (14) by means of peripheral foam (16) on the underside of the pane, and the anti-shatter film (30) is adhesively bonded to the underside of the pane in the central region of the pane by means of an adhesive film (28), and is embedded in the peripheral foam in the edge region of the pane or firmly connected to the carrier arrangement.

5. Process according to one of the preceding claims, **characterized in that** the anti-shatter film (30) is laminated onto the underside of the pane (14) or of the solar cell assembly (60, 62) by means of an adhesive film (28).

## Revendications

1. Procédé de fabrication d'un panneau en verre pour fermer une ouverture dans un toit de véhicule, comprenant une vitre (14) en verre de sécurité au moins en partie transparente, un film de protection anti-éclat (30) au moins en partie transparent étant appliqué sur la face inférieure de la vitre ou sur la face inférieure d'une structure composite incluant des capteurs solaires (60, 62) disposée sur la face inférieure de la vitre, et le film de protection anti-éclat présentant une structure de surface non plane définie, dans lequel procédé :
le film de protection anti-éclat (30) au moins en partie transparent est appliqué sur la face inférieure de la vitre ou sur la face inférieure de la structure composite incluant des capteurs solaires (60, 62) disposée sur la face inférieure de la vitre,
**caractérisé en ce que**
le film de protection anti-éclat (30) est appliqué en utilisant une matrice dont la surface est structurée, laquelle présente une structure de surface correspondante, afin de conférer au film de protection anti-éclat la structure de surface définie, la structure de surface de la matrice pressant contre le film de protection anti-éclat (30) pendant l'application.

2. Procédé selon la revendication 1, **caractérisé en ce que** le film de protection anti-éclat (30) présente une structure de surface grenue.

3. Procédé selon l'une quelconque des revendications précédentes, **caractérisé en ce que** les capteurs solaires (62) de la structure composite incluant des capteurs solaires (60) sont réalisés partiellement transparents.

4. Procédé selon l'une quelconque des revendications précédentes, **caractérisé en ce que** dans la zone périphérique de la vitre (14) est appliqué un support (18) par application de mousse (16) sur la face inférieure de la vitre, et le film de protection anti-éclat (30) est collé dans la partie centrale de la vitre au moyen d'un film adhésif (28) sur la face inférieure de la vitre et est inclus dans la mousse dans la zone périphérique de la vitre ou rendu solidaire du support.

5. Procédé selon l'une quelconque des revendications précédentes, **caractérisé en ce que** le film de protection anti-éclat (30) est appliqué au moyen d'un film adhésif (28) sur la face inférieure de la vitre (14) ou de la structure composite incluant des capteurs solaires (60, 62).
